# EUROPEAN PATENT APPLICATION

(11) **EP 4 543 009 A1**
(43) Date of publication of application: **23.04.2025**
(21) Application number: 23822903.3
(22) Date of filing: 25.05.2023
(51) Int. Cl.: H04N 21/2187

(54) **INFORMATION DISPLAY METHOD AND APPARATUS, ELECTRONIC DEVICE, AND STORAGE MEDIUM**

(30) Priority: 15.06.2022 CN 202210677747
(71) Applicant: BEIJING YOUZHUJU NETWORK TECHNOLOGY CO. LTD., Beijing 101299 (CN)
(72) Inventor: FENG, Lan, Beijing 100028 (CN); HU, Jiali, Beijing 100028 (CN); ZHAO, Mengjie, Beijing 100028 (CN)
(74) Representative: Dentons UK and Middle East LLP
(86) International application number: PCT/CN2023/096324
(87) International publication number: WO 2023/241333

(57) **Abstract**

The present disclosure relates to an information display method and apparatus, an electronic device, and a storage medium. The method comprises: displaying an information flow page comprising an object display page, wherein the object display page comprises summary information corresponding to one or more objects to be displayed, the one or more objects to be displayed are objects to be displayed that are corresponding to the information flow page, and if the one or more objects to be displayed comprise a target object to be displayed, the summary information corresponding to the target object to be displayed further comprises one or more pieces of specification attribute information of the target object to be displayed; and if at least one piece of specification attribute information is selected, in response to a determination operation for the target summary information, displaying an order configuration page corresponding to the target object to be displayed.

## Description

The present application is based on and claims priority to Chinese Application No. 202210677747.5 filed on June 15, 2022, the disclosure of which is incorporated into the present application by reference herein in its entirety.

### TECHNICAL FIELD

The present disclosure relates to the technical field of information display, and in particular an information display method and apparatus, an electronic device, and a storage medium.

### BACKGROUND

With the continuous development of video live technologies, people's demands for related functions in live rooms are becoming more and more diversified, and especially for the display mode, display content, order placing process, and etc. of live pages closely related to people's viewing experience, there are various demands.

### SUMMARY

In order to solve the above technical problem or at least partially solve the above technical problem, the present disclosure provides an information display method and apparatus, an electronic device, and a storage medium.

According to a first aspect, the present disclosure provides an information display method, comprising:
displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object further comprises one or more pieces of specification attribute information of the target to-be-displayed object;
if at least one piece of the specification attribute information is in a selected state, displaying an order confirmation page corresponding to the target to-be-displayed object in response to a determination operation on the target summary information.

According to a second aspect, the present disclosure provides an information display apparatus, comprising:
a first display module for displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object also comprises one or more pieces of specification attribute information of the target to-be-displayed object;
a second display module for displaying, if at least one piece of the specification attribute information is in a selected state, an order confirmation page corresponding to the target to-be-displayed object in response to a determination operation on the target summary information.

According to a third aspect, the present disclosure further provides an electronic device, which comprises:
one or more processors;
storage means for storing one or more programs;
wherein the one or more programs, when executed by the one or more processors, cause the one or more processors to implement the information display method described above.

According to a fourth aspect, the present disclosure further provides a computer readable storage medium storing thereon a computer program which, when executed by a processor, implements the information display method described above.

According to a fifth aspect, the present disclosure further provides a computer program product comprising a computer program which, when executed by a processor, implements the information display method described above.

According to a sixth aspect, the present disclosure further provides a computer program, comprising: instructions which, when executed by a processor, cause the processor to execute the information diaplay method described above.

### BRIEF DESCRIPTION OF THE DRAWINGS

The accompanying drawings, which are incorporated into and constitute a portion of the present specification, illustrate embodiments consistent with the present disclosure and together with the specification, serve to explain the principles of the present disclosure.

In order to explain the technical solution in the embodiments of the present disclosure or the prior art more clearly, the drawings needed in the description of the embodiments or the prior art will be briefly introduced below. Obviously, for ordinary people in the art, other drawings can be obtained according to these drawings without paying creative effort.
Fig. 1 is a flow diagram of an information display method provided by an embodiment of the present disclosure;
Fig. 2 is a schematic diagram of a preview stream page provided by an embodiment of the present disclosure;
Figs. 3 and 4 are schematic diagrams of two other information stream pages provided by embodiments of the present disclosure;
Fig. 5 is a schematic diagram of another information stream page provided by an embodiment of the present disclosure;
Figs. 6 and 7 are schematic diagrams of two other information stream pages provided by embodiments of the present disclosure;
Fig. 8 is a schematic diagram of another information stream page provided by an embodiment of the present disclosure;
Fig. 9 is a schematic structural diagram of an information display apparatus in an embodiment of the present disclosure;
Fig. 10 is a schematic structural diagram of an electronic device in an embodiment of the present disclosure.

### DETAILED DESCRIPTION

In order to understand the above objects, features and advantages of the present disclosure more clearly, the solution of the present disclosure will be further described below. It should be noted that the embodiments of the present disclosure and the features in the embodiments can be combined with each other without conflict.

In the following description, many specific details are set forth in order to fully understand the present disclosure, but the present disclosure can be practiced in other ways than those described herein. Obviously, the embodiments in the specification are only a portion of the embodiments of the present disclosure, not all of them.

At present, in the live scene, the commodity list in the live room often includes commodity cards of a plurality of commodities. If the commodity list includes a commodity card of commodity A, commodity A has a plurality of colors, such as red, white, and blue. If a user wishes to place an order to buy commodity A in red, the user needs to click the commodity card of commodity A to enter a detail introduction page of commodity A, and then click the "Buy Now" option to enter a specification attribute selection page of commodity A. The specification attribute selection page of commodity A displays all color options of commodity A. The user selects red in the specification attribute selection page of commodity A, and clicks the "Confirm" option to enter an order confirmation page. The user can only complete the whole order placing operation by clicking "Submit Order" on the order confirmation page. The whole order placing operation has complicated steps, takes a long time for the order placement, and has a poor user experience. In addition, how to meet the users' diverse demands for displaying live pages so as to enhance users' viewing experience is an urgent problem to be solved.

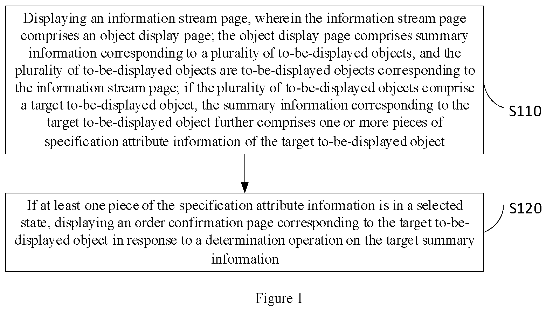

Fig. 1 is a flow diagram of an information display method provided by an embodiment of the present disclosure. The present embodiment can be applied to cases where information is displayed in a client. The method can be executed by an information display apparatus, which can be implemented in software and/or hardware. The apparatus can be configured in an electronic device, such as a terminal, including but not limited to a smart phone, a palmtop computer, a tablet computer, a wearable device with a display screen, a desktop, a notebook computer, an all-in-one machine, a smart home device, and the like. Alternatively, the present embodiment can be applied to cases where information is displayed in a server. The method can be executed by an information display apparatus, which can be implemented in software and/or hardware. The apparatus can be configured in an electronic device, such as a server.

As shown in Fig. 1, the method can specifically include:
S110, displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object also comprises one or more pieces of specification attribute information of the target to-be-displayed object.

The information stream page can be a page used in an application program for displaying information streams to users. In some embodiments, the information stream page can be a preview stream page or a detail information stream page of different types of information such as video, text, and image.

The preview stream page refers to a page for traffic driving. In a live scene, the information stream page can be a video page for traffic driving of a live room (that is, a video page for guiding the user to jump to a video interface for playing the live content of the live room, for example, the user can enter the video interface of the live room by clicking the information stream page, wherein the information stream page is a traffic driving page of the live room), such as a video page of a short video (the video content of the short video can be different from that of the live room) or a live room preview stream page. The live room preview stream page is used for displaying a live preview video. The live preview video can be a video clip for representing the live content of the live room, and the live content can be previewed through this video clip, which can be generated according to the live content of the live room. For example, the live content can be generated as a live preview video or by cutting the live content.

In the live scene, the detail information stream page includes a live room display page, which refers to a page displayed after entering the live room on a live. Optionally, the live room display page includes a live room public screen.

The to-be-displayed object is a commodity shared by live streaming with viewers by the streamer in the live room. The commodity can be an article or a service, etc. In a live room, a commodity list can be displayed by clicking the shopping cart, and the commodity list includes a plurality of commodities. The streamer shares the commodities in the commodity list with viewers by live streaming. The commodities in the commodity list all correspond to the information stream page (including the live room preview stream page or the live room display page).

The to-be-displayed object includes a plurality of attributes. The attributes of the to-be-displayed object are characteristics on the structure and composition of the to-be-displayed object *per se.* If the to-be-displayed object is an article, its attributes can include, but are not limited to, one or more of the following: name, style, size, material, function, trademark, type, price, color, packaging, and etc. of the to-be-displayed object. If the to-be-displayed object is a service, its attributes are contents and precautions of the to-be-displayed object. The attributes of the to-be-displayed object reflect attraction of the to-be-displayed object to customers. The attributes of the to-be-displayed object is a main stimulus that can affect the cognition, emotion and behavior of the viewing users. The attribute information of the to-be-displayed object is information describing the attributes of the to-be-displayed object. The attribute information of the to-be-displayed object enables users to quickly understand, select and buy the to-be-displayed object.

The target to-be-displayed object is a to-be-displayed object meeting a preset screening condition, which is screened out from all the to-be-displayed objects corresponding to the information stream page. Optionally, the target to-be-displayed object includes at least one of the following: a to-be-displayed object in a state of being explained, a to-be-displayed object with a display priority meeting a preset display condition, and a to-be-displayed object with a popularity value meeting a preset popularity condition.

The state of the to-be-displayed object includes a state of being explained and a state of to-be-explained. In the live process, the streamer can explain all the to-be-displayed objects corresponding to the information stream page (that is, each to-be-displayed object corresponding to the live room) one by one. The state of the to-be-displayed object that the current streamer is explaining is the state of being explained. Except for the to-be-displayed object in the state of being explained, all the other to-be-displayed objects are in the state of to-be-explained.

The display priority of the to-be-displayed object is a basis for judging whether the to-be-displayed object can be used as the target to-be-displayed object. The display priority information of the to-be-displayed object can be specified in advance, or determined according to one or more pieces of specific attribute information of the to-be-displayed object (such as type, price, inventory, etc.), or determined according to interests and demands of the group to which the viewing user belongs, which is not limited by the present application. Illustratively, the display priority of the to-be-displayed object with the "main push" label is preset to be higher than that of other to-be-displayed objects.

The popularity information of the to-be-displayed object is information characterizing the popularity degree of the to-be-displayed object. Illustratively, the popularity information of the to-be-displayed object includes at least one of the following: number of followers, number of favorites, number of purchase, number of reviews, number of shares, number of views, number of consultations and number of likes of the to-be-displayed object.

The function of the preset screening condition is to screen out the target to-be-displayed object from all the to-be-displayed objects corresponding to the information stream page.

There are various specific preset screening conditions, which are not limited by the present application. In practice, the preset screening condition can be set according to the characteristics of the target to-be-displayed object to be screened out.

Illustratively, if the target to-be-displayed object includes the to-be-displayed object in the state of being explained, the preset screening condition is that the to-be-displayed object is in the state of being explained. If the target to-be-displayed object includes the to-be-displayed object with the highest display priority, the preset screening condition is that the display priority is the highest. If the target to-be-displayed object includes the to-be-displayed object with the highest sales volume at the current moment, the preset screening condition is that the sales volume is the highest from the start time of this live to the current time.

The summary information is used for collectively displaying a portion of the attribute information of the corresponding to-be-displayed object. In addition, the summary information also has a jump function that a trigger operation of the user on the summary information can cause the information stream page to be switched to an order placing page corresponding to the to-be-displayed object. The order placing page includes the detail information introduction page of the to-be-displayed object, and the specification attribute selection page of the to-be-displayed object, or the order confirmation page of the to-be-displayed object. The detail information introduction page of the to-be-displayed object includes all the attribute information of the to-be-displayed object. The specification attribute selection page of the to-be-displayed object and the order confirmation page of the to-be-displayed object will be described in detail later, and will not be repeated here.

The object display page is a page that collectively displays the summary information of all the to-be-displayed objects corresponding to the information stream page. Optionally, the object display page can be an object display list. In the object display page, the summary information of each of the to-be-displayed objects can be displayed in the form of a card. The summary information of one to-be-displayed object is displayed in one card.

The specification attribute information is one or more attributes of the to-be-displayed object. By selecting the specification attribute information, the minimum stock keeping unit can be defined. The minimum stock keeping unit (SKU) is the basic unit for measuring stock in and out. The minimum stock keeping unit is the smallest unit that defines a commodity, which is decided by a combination of attributes of the commodity. For example, clothing has a plurality of specification attributes that users can select, such as size, color, and so on. It is assumed that there are three selections for the size and color of a garment, respectively, then the garment has nine (3×3=9) minimum stock keeping units. Each minimum stock keeping unit has a unique code. The function of this code is to distinguish and record information of a combination of different attributes. In other words, one to-be-displayed object can include one or more pieces of specification attribute information, and through a combination of the one or more pieces of specification attribute information, one or more minimum stock keeping units can be obtained. Illustratively, the specification attribute information includes at least one of the following: size, style, material, and color.

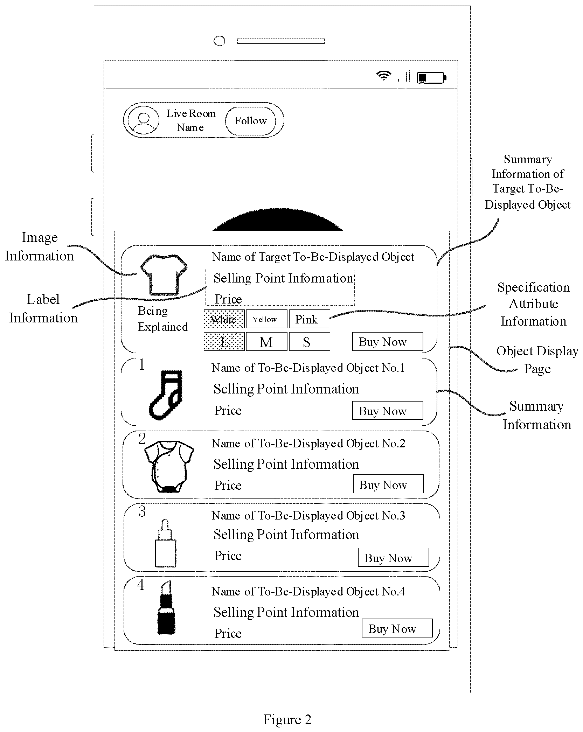

Fig. 2 is a schematic diagram of a preview stream page provided by an embodiment of the present disclosure. Referring to Fig. 2, the preview stream page is a live room display page, and the to-be-displayed objects corresponding to the live room display page are commodities, and the live room display page includes summary information corresponding to a plurality of to-be-displayed objects. The target to-be-displayed object is set as the to-be-displayed object in the state of being explained. The summary information corresponding to the target to-be-displayed object includes a plurality of pieces of specification attribute information of the target to-be-displayed object.

In practice, when the summary information corresponding to the target to-be-displayed object includes a plurality of pieces of specification attribute information of the target to-be-displayed object, the plurality of pieces of specification attribute information can be the specification attribute information of the same category or of different categories. Illustratively, in Fig. 2, the plurality of pieces of specification attribute information can be classified into two categories: one is color and the other is size. The specification attribute information belonging to the color category is located in the first row, and the specification attribute information belonging to the size category is located in the second row. There are a plurality of pieces of specification attribute information under each category.

S120, if at least one piece of the specification attribute information is in a selected state, displaying an order confirmation page corresponding to the target to-be-displayed object in response to a determination operation on the target summary information.

The order confirmation page refers to a page that collects together all the specification attribute information of the target to-be-displayed object in the selected state to be presented to the user. The order confirmation page is a page to confirm information with the user for the last time before placing an order. After displaying the order confirmation page, the terminal will enter the link of guiding the user to pay for the order.

In one embodiment, at least one piece of specification attribute information of the target to-be-displayed object can be in a selected state by default. Illustratively, referring to Fig. 2, for pieces of the specification attribute information of any category, the piece of specification attribute information ranked first is in the selected state by default, that is, "white" among the specification attribute information of the color category is in the selected state by default, and "large" among the specification attribute information of the size category is in the selected state by default.

In another embodiment, the specific implementation method of this step includes: switching the selected piece of specification attribute information from an unselected state to a selected state in response to a selection operation on at least one piece of the specification attribute information; displaying an order confirmation page corresponding to the target to-be-displayed object in response to a determination operation on the summary information of the target to-be-displayed object.

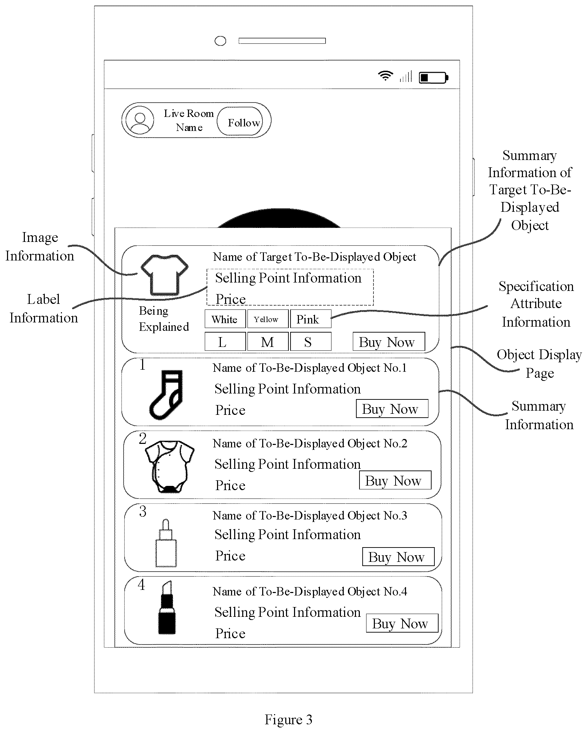

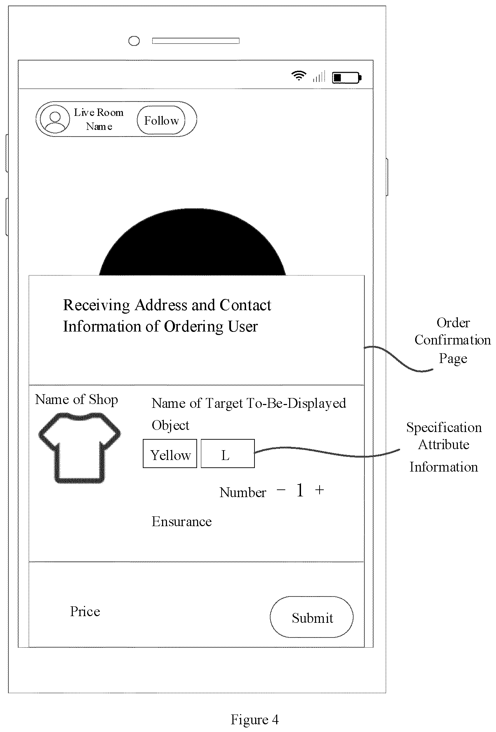

The selection operation is an operation that the user conveys the recognized and favorite specification attribute information to the terminal. The selection operation can specifically be a click operation or a slide operation on one or several pieces of specific specification attribute information. The determination operation is an operation that the user conveys to the terminal that the specification attribute information in the selected state presented by the current terminal is consistent with his will. The determination operation can be a click operation or a slide operation on a certain control (such as a "confirm" control and a "go to buy" control). Figs. 3 and 4 are schematic diagrams of two other information stream pages provided by embodiments of the present disclosure. Illustratively, referring to Fig. 3, in an initial state, all pieces of specification attribute information of the target to-be-displayed object are in the unselected state. When the user clicks two pieces of specification attribute information of "white" and "large" in the summary information of the target to-be-displayed object in Fig. 3, as shown in Fig. 2, the two pieces of specification attribute information of "white" and "large" are presented in the selected state. The user clicks the "go to buy" control in Fig. 2 as the determination operation on the summary information of the target to-be-displayed object. After the user clicks the "go to buy" control in Fig. 2, as shown in Fig. 4, the order confirmation page corresponding to the target to-be-displayed object is displayed. In the order confirmation page, only two pieces of specification attribute information in the selected state are displayed, namely "white" and "large".

It should be noted that, in practice, if the target to-be-displayed object only includes specification attribute information of one category, then only one piece of specification attribute information is in the selected state in this step. If the target to-be-displayed object includes specification attribute information of N categories, then in this step, the N pieces of specification attribute information are in the selected state, and each piece of specification attribute information in the selected state corresponds to a different category, where N is a positive integer greater than or equal to 2. The categories of specification attribute information include size, style, material, color, and etc.

Optionally, the display effect of the specification attribute information in the selected state is different from that of the specification attribute information in the unselected state. Such a setting is for the purpose that the user can visually distinguish which pieces of specification attribute information are in the selected state and which pieces of specification attribute information are in the unselected state.

In order to make the display effect of specification attribute information in the selected state different from that of specification attribute information in the unselected state, in practice, at least one of the following modes can be adopted: a background color of the specification attribute information in the selected state is different from that of the piece of specification attribute information in the unselected state; a text color of the specification attribute information in the selected state is different from that of the piece of specification attribute information in the unselected state; a border color of the specification attribute information in the selected state is different from that of the piece of specification attribute information in the unselected state.

Further, the summary information includes image information, wherein if at least one piece of the specification attribute information is in the selected state, the image information is image information of the target to-be-displayed object under the specification attribute in the selected state. The image information is a picture or a dynamic image of the to-be-displayed object corresponding to the summary information. Illustratively, with continued reference to Fig. 2, it is assumed that the specification attribute information "white" of the T-shirt (that is, the target to-be-displayed object) is in the selected state at a certain time, then the image information at that time is a picture of the T-shirt in white. If the specification attribute information "yellow" of the T-shirt (that is, the target to-be-displayed object) is in the selected state at a certain time, then the image information at that time is a picture of the T-shirt in yellow.

Further, the summary information includes label information, wherein if at least one piece of the specification attribute information is in the selected state, then the label information is label information of the target to-be-displayed object under the specification attribute in the selected state. The label information is composed of one or more pieces of information other than the specification attribute information and the image information in the summary information. Illustratively, with continued reference to Fig. 2, it is assumed that the label information includes selling point information and price. It is assumed that the specification attribute information "white" of the T-shirt (that is. the target to-be-displayed object) is in the selected state at a certain time, then the label information at that time is the selling point information and price of the T-shirt in white. If the specification attribute information "yellow" of the T-shirt (that is, the target to-be-displayed object) is in the selected state at a certain moment, then the label information at that time is the selling point information and price of the T-shirt in yellow.

On the basis of the above technical solution, by providing and displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, then the summary information corresponding to the target to-be-displayed object further comprises one or more pieces of specification attribute information of the target to-be-displayed object; if at least one piece of the specification attribute information is in a selected state, then an order confirmation page corresponding to the target to-be-displayed object is displayed in response to a determination operation on the target summary information, its essence is to transparently transmit the specification attribute information of the target to-be-displayed object to the object display page, so that the user can directly select the specification attribute information of the target to-be-displayed object in the object display page, which can simplify the steps of placing an order to buy the target to-be-displayed object and shorten the time consumed for the order placing operation.

In one embodiment, optionally, the display position of the summary information corresponding to the target to-be-displayed object is a first display position in the object display page. Illustratively, with reference to Fig. 2, the target to-be-displayed object is a T-shirt, and the summary information corresponding to the T-shirt is located at the first display position in the object display list. Such a setting is for the purpose of highlighting the summary information of the target to-be-displayed object, which is convenient for users to quickly recognize the summary information of the target to-be-displayed object in the summary information of the plurality of to-be-displayed objects.

On the basis of the above technical solutions, optionally, the summary information includes an information display area, and the specification attribute information is located in the information display area. If a number of pieces of specification attribute information that can be accommodated in the information display area is less than the number of pieces of specification attribute information that need to be displayed, then the method further includes: switching the specification attribute information displayed in the information display area in response to a trigger operation on the information display area.

The information display area refers to an area where the specification attribute information is collectively displayed. The trigger operation on the information display area includes a selection operation, a click operation, a slide operation or other operation on a local area in the information display area or on the entirety of the information display area. Such a setting can enable users to switch the specification attribute information in the summary information.

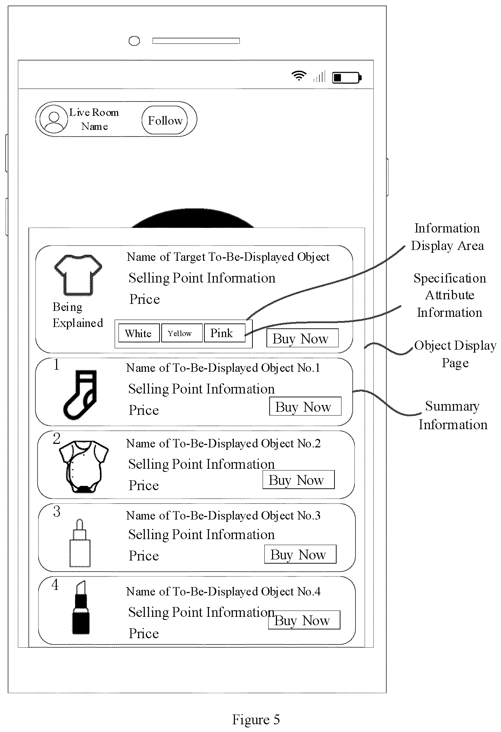

In one embodiment, "switching the specification attribute information displayed in the information display area" includes switching all the specification attribute information currently displayed in the information display area. Illustratively, Fig. 5 is a schematic diagram of another information stream page provided by an embodiment of the present disclosure. Referring to Fig. 5, it is assumed that the number of pieces of specification attribute information that can be accommodated in the information display area is three, and the pieces of specification attribute information of the target to-be-displayed object is six in total, and three pieces of specification image information can be displayed in the information display area at one time. If the first to third pieces of logo image information are being displayed in the information display area at a certain time, when the user performs a slide operation on the entirety of the information display area, the pieces of specification attribute information displayed in the information display area are switched, so that the fourth to sixth pieces of specification attribute information are displayed in the information display area, and the first to third pieces of specification attribute information are no longer displayed.

In another embodiment, "switching the specification attribute information displayed in the information display area" includes switching a portion of the specification attribute information currently displayed in the information display area.

Optionally, if the trigger operation on the information display area is a slide operation on the information display area, then slide information of the slide operation is obtained, wherein, the slide information includes one or more of a slide distance, a start position of the slide operation, an end position of the slide operation, and a slide direction. Based on the slide information, the target specification attribute information is determined from the pieces of specification attribute information currently displayed in the information display area. The target specification attribute information is switched so that the information display area after switching does not include the target specification attribute information.

Further, different slide distances can be preset to correspond to different numbers of pieces of specification attribute information to be switched. If the slide information includes a slide direction and a slide distance, the determination of target specification attribute information from the specification attribute information currently displayed in the information display area based on the slide information includes: determining the number of pieces of specification attribute information to be switched this time based on the slide distance; determining a counting direction based on the slide direction; based on the number of pieces of specification attribute information to be switched this time as well as the counting direction, determining the target specification attribute information from the specification attribute information currently displayed in the information display area.

With continued reference to Fig. 5, it is assumed that the number of pieces of specification attribute information that can be accommodated in the information display area is three, while the pieces of specification attribute information of the target to-be-displayed object is determined to be eight in total, and three pieces of specification attribute information can be displayed in the information display area at one time. If the second to fourth pieces of specification attribute information are being displayed in the information display area at a certain time, when the user performs a leftward slide operation on the information display area, the counting direction thereof is determined to be from left to right. According to the slide distance of the slide operation, it is determined that two pieces of specification attribute information need to be switched. Therefore, the second and third pieces of specification attribute information are taken as the target specification attribute information, and the second to third pieces of specification attribute information displayed in the information display area are switched, so that the fourth, fifth and sixth pieces of specification attribute information are displayed in the information display area after switching, and the second to third pieces of specification attribute information are no longer displayed.

In another embodiment, the summary information includes an information display area, and the specification attribute information is located in the information display area. If the number of pieces of specification attribute information that can be accommodated in the information display area is less than the number of pieces of specification attribute information that need to be displayed, a portion of the pieces of the specification attribute information and an omit control are displayed in the information display area. The method further includes: displaying a specification attribute selection page in response to a trigger operation on the omit control, wherein the specification attribute selection page comprises all pieces of the specification attribute information of the target to-be-displayed object.

The specification attribute selection page is used for collectively display all the specification attribute information of the target to-be-displayed object, and in the specification attribute selection page, the user can select the specification attribute information, and the selected specification attribute information will be switched from the unselected state to the selected state, so that the terminal can know which minimum stock keeping unit in the commodity the user wants to buy.

The omit control is used for indicating that not all the specification attribute information of the target to-be-displayed object are fully displayed in the summary information. The trigger operation on the omit control includes a selection operation, click operation or a slide operation on the omit control.

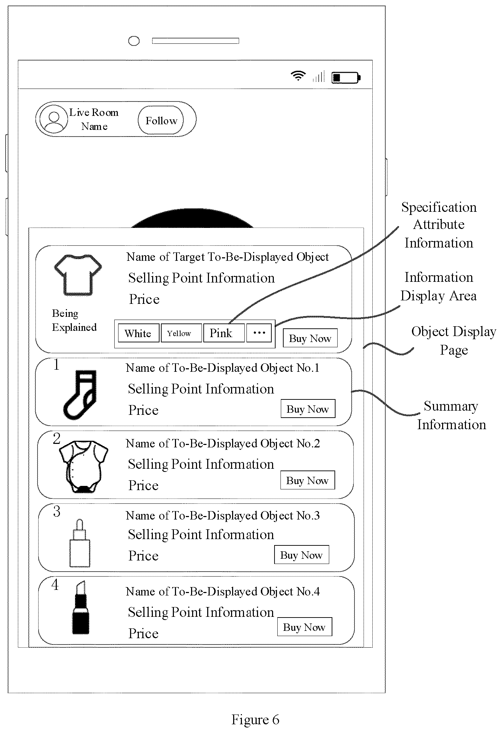

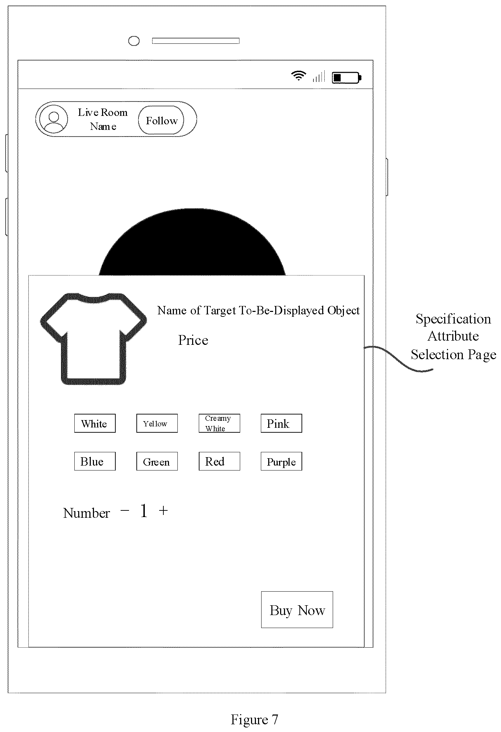

Illustratively, Figs. 6 and 7 are schematic diagrams of two other information stream pages provided by embodiments of the present disclosure. Refer to Fig. 6, "..." in the information stream page represents the omit control. When the user clicks the omit control, as shown in Fig. 7, the specification attribute selection page is displayed, which includes all the specification attribute information of the target to-be-displayed object.

In Fig. 7, only the specification attribute selection page of the target to-be-displayed object is displayed in the information stream page. This is only a specific example of the present application, but not a limitation on the present application. In practice, in addition to the specification attribute selection page of the target to-be-displayed object, the information stream page can further display related information of other to-be-displayed objects, such as the summary information of other to-be-displayed objects.

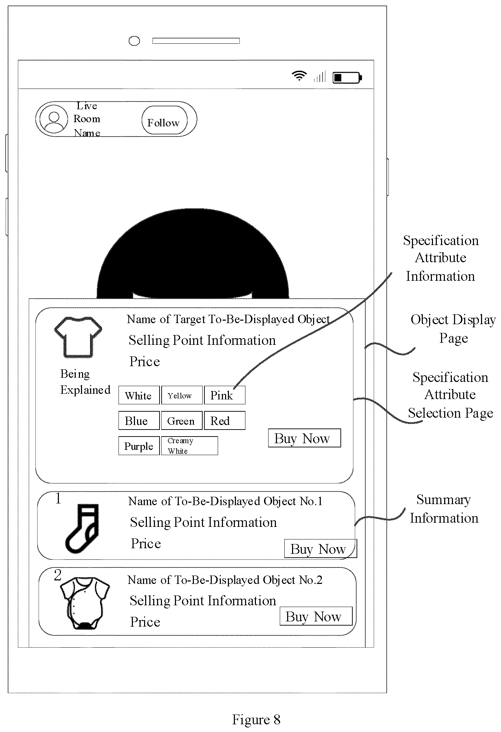

Fig. 8 is a schematic diagram of another information stream page provided by an embodiment of the present disclosure. Refer to Fig. 6, "..." in the information stream page represents the omit control. When the user clicks the omit control, as shown in Fig. 8, the specification attribute selection page is displayed, which includes all the specification attribute information of the target to-be-displayed object. It is worth noting that in Fig. 8, in addition to the specification attribute selection page of the target to-be-displayed object, the information stream page can further include the summary information of other to-be-displayed objects.

It should be noted that for the sake of simple description, all the aforementioned method embodiments are expressed as a combination of a series of actions, but those skilled in the art should know that the present invention is not limited by the described action sequence, because some steps can be performed in other sequences or at the same time according to the present invention. Next, those skilled in the art should also know that the embodiments described in the specification all belong to preferred embodiments, and the actions and modules involved are not necessarily necessary for the present invention.

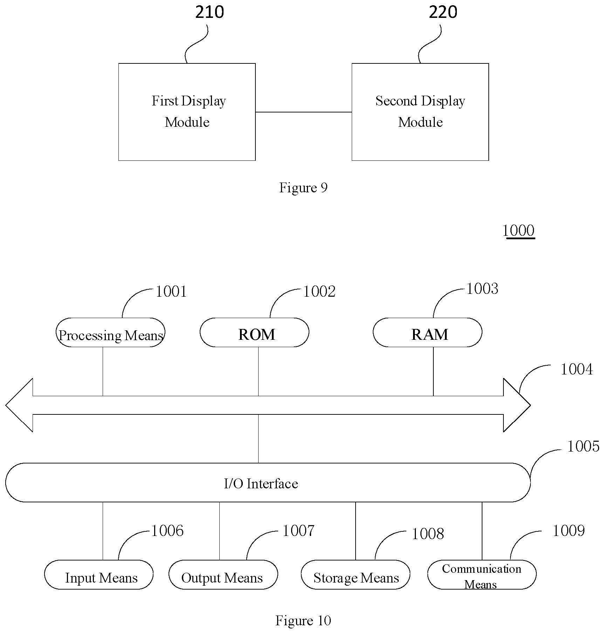

Fig. 9 is a schematic structural diagram of an information display apparatus in an embodiment of the present disclosure. The information display apparatus provided by the embodiment of the present disclosure can be configured in a client or a server. Referring to Fig. 9, the information display apparatus specifically includes:
a first display module 210 for displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object further comprises one or more pieces of specification attribute information of the target to-be-displayed object;
a second display module 220 for displaying, if at least one piece of the specification attribute information is in a selected state, an order confirmation page corresponding to the target to-be-displayed object in response to a determination operation on the target summary information.

Further, the target to-be-displayed object includes at least one of the following:
the to-be-displayed object in a state of being explained, the to-be-displayed object with a display priority meeting a preset display condition, and a to-be-displayed object with a popularity value meeting a preset popularity condition.

Further, if at least two pieces of the specification attribute information are in the selected state, each piece of the specification attribute information in the selected state corresponds to a different category.

Further, a display position of the summary information corresponding to the target to-be-displayed object is a first display position in the object display page.

Further, the second display module 220 is used for:
switching the selected piece of specification attribute information from the unselected state to the selected state in response to a selection operation on at least one piece of the specification attribute information;
displaying an order confirmation page corresponding to the target to-be-displayed object in response to the determination operation on the summary information of the target to-be-displayed object.

Further, at least one of the following is satisfied:
a background color of the specification attribute information in the selected state is different from that of the piece of specification attribute information in the unselected state; or,
a text color of the specification attribute information in the selected state is different from that of the piece of specification attribute information in the unselected state; or,
a border color of the specification attribute information in the selected state is different from that of the piece of specification attribute information in the unselected state.

Further, the summary information includes image information; if at least one piece of the specification attribute information is in the selected state, the image information is the image information of the target to-be-displayed object under the specification attribute in the selected state; and/or,
the summary information includes label information; if at least one piece of the specification attribute information is in the selected state, the label information is the label information of the target to-be-displayed object under the specification attribute in the selected state.

Further, the summary information includes an information display area, and the specification attribute information is located in the information display area; if the number of pieces of the specification attribute information that can be accommodated in the information display area is less than the number of pieces of specification attribute information that need to be displayed, the apparatus further comprises:
a switching module for switching the specification attribute information displayed in the information display area in response to a trigger operation on the information display area.

Further, the summary information comprises an information display area, and the specification attribute information is located in the information display area. If the number of pieces of the specification attribute information that can be accommodated in the information display area is less than the number of pieces of specification attribute information that need to be displayed, a portion of the pieces of the specification attribute information and an omit control are displayed in the information display area. The apparatus further comprises:
a switching module for displaying a specification attribute selection page in response to a trigger operation on the omit control, wherein the specification attribute selection page comprises all the specification attribute information of the target to-be-displayed object.

Further, the information stream page includes a live room preview stream page or a live room display page;
the to-be-displayed object comprises commodities;
the specification attribute information comprises at least one of the following: size, style, material, and color.

The information display apparatus provided by the embodiment of the present disclosure can execute the steps executed by the client or the server in the information display method provided by the embodiment of the present disclosure, and has the execution steps and beneficial effects, which are not repeated here.

Fig. 10 is a schematic structural diagram of an electronic device in an embodiment of the present disclosure. Referring specifically to Fig. 10, there is shown a schematic structural diagram of an electronic device 1000 suitable for implementing an embodiment of the present disclosure. The electronic device 1000 in the embodiment of the present disclosure can include, but is not limited to, mobile terminals such as mobile phone, notebook computer, digital broadcast receiver, Personal Digital Assistant (PDA), Tablet Computer (PAD), Portable Multimedia Player (PMP), vehicle-mounted terminal (such as vehicle-mounted navigation terminal), and wearable electronic device, as well as fixed terminals such as digital TV, desktop computer, and smart home device. The electronic device shown in Fig. 10 is only an example, and should not bring any limitation to the function and application scope of the embodiment of the present disclosure.

As shown in Fig. 10, the electronic device 1000 can include a processing means (e.g., a central processor, a graphics processor, etc.) 1001, which can execute various appropriate actions and processes according to a program stored in a read-only memory (ROM) 1002 or a program loaded from a storage means 1008 onto a random access memory (RAM) 1003 to implement the information display method according to the embodiment of the present disclosure. In the RAM 1003, various programs and information required for the operation of the electronic device 1000 are also stored. The processing means 1001, the ROM 1002 and the RAM 1003 are connected to each other through a bus 1004. An input/output (I/O) interface 1005 is also connected to the bus 1004.

Generally, the following means can be connected to the I/O interface 1005: an input means 1006 including, for example, a touch screen, a touch pad, a keyboard, a mouse, a camera, a microphone, an accelerometer, a gyroscope, etc.; an output means 1007 including, for example, a liquid crystal display (LCD), a speaker, a vibrator, etc.; a storage means 1008 including, for example, a magnetic tape, a hard disk, etc.; and a communication means 1009. The communication means 1009 can allow the electronic device 1000 to perform wireless or wired communication with other devices to exchange information. Although Fig. 10 shows electronic device 1000 with various means, it should be understood that it is not required to implement or provide all the means shown. More or fewer means can alternatively be implemented or provided.

In particular, according to an embodiment of the present disclosure, the process described above with reference to the flow diagram can be implemented as a computer software program. For example, an embodiment of the present disclosure includes a computer program product, which includes a computer program carried on a non-transient computer readable medium, and the computer program contains program codes for executing the method shown in the flow diagram, thereby implementing the information display method as described above. In such an embodiment, the computer program can be downloaded and installed from the network through the communication means 1009, or installed from the storage means 1008, or installed from the ROM 1002. When the computer program is executed by the processing device 1001, the above functions defined in the method of the embodiment of the present disclosure are executed.

It should be noted that the computer readable medium mentioned above in the present disclosure can be a computer readable signal medium or a computer readable storage medium or any combination of the two. The computer readable storage medium can be, for example, but not limited to, an electrical, magnetic, optical, electromagnetic, infrared, or semiconductor system, apparatus or device, or a combination of any of the above. More specific examples of the computer readable storage medium can include, but are not limited to, an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer readable storage medium can be any tangible medium containing or storing a program, which can be used by or in combination with an instruction execution system, apparatus or device. In the present disclosure, the computer readable signal medium can include an information signal propagated in baseband or as a part of a carrier wave, in which computer readable program codes are carried. This propagated information signal can take many forms, including but not limited to an electromagnetic signal, an optical signal or any suitable combination of the above. The computer readable signal medium can also be any computer readable medium other than a computer readable storage medium, which can send, propagate or transmit a program for use by or in connection with an instruction execution system, apparatus or device. The program codes contained in the computer readable medium can be transmitted by any suitable medium, including but not limited to: wires, optical cables, RF (radio frequency) and the like, or any suitable combination of the above.

In some embodiments, clients and servers can communicate by using any known or future developed network protocol such as HyperText Transfer Protocol (HTTP), and can be interconnected with digital information communication in any form or medium (for example, communication network). Examples of communication networks include a local area network ("LAN"), a wide area network ("WAN"), the Interconnecting network (for example, the Internet) and end-to-end networks (for example, ad hoc end-to-end networks), as well as any known or future developed networks.

The above computer readable medium can be contained in the above electronic device, or exist alone without being assembled into the electronic device.

The above computer readable medium carries one or more programs that, when executed by the electronic device, cause the electronic device to:
displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object further comprises one or more pieces of specification attribute information of the target to-be-displayed object;
if at least one piece of the specification attribute information is in a selected state, displaying an order confirmation page corresponding to the target to-be-displayed object in response to a determination operation on the target summary information.

Optionally, when the above one or more programs are executed by the electronic device, the electronic device can also execute other steps described in the above embodiment.

Computer program codes for executing the operations of the present disclosure can be written in one or more programming languages or their combinations, including but not limited to object-oriented programming languages, such as Java, Smalltalk, C++, as well as conventional procedural programming languages, such as "C" language or similar programming languages. The program codes can be completely executed on a user computer, partially executed on the user computer, executed as an independent software package, partially executed on the user computer and partially executed on a remote computer, or completely executed on the remote computer or a server. In the case involving a remote computer, the remote computer can be connected to a user computer through any kind of network, including a local area network (LAN) or a wide area network (WAN), or can be connected to an external computer (for example, through the Internet using an Internet service provider).

The flow diagrams and block diagrams in the drawings illustrate the architecture, functions and operations of possible implementations of the system, method and computer program product according to various embodiments of the present disclosure. In this regard, each block in the flow diagrams or block diagrams can represent a module, a program segment, or a part of codes that contains one or more executable instructions for implementing specified logical functions. It should also be noted that in some alternative implementations, the functions noted in the blocks can occur in a different order than those noted in the drawings. For example, two blocks shown in succession can actually be executed substantially in parallel, and they can sometimes be executed in the reverse order, depending on the functions involved. It should also be noted that each or a combination of blocks in the block diagrams and/or flow diagrams can be implemented by a dedicated hardware-based system that executes specified functions or operations, or by a combination of dedicated hardware and computer instructions.

The units involved in the embodiments described in the present disclosure can be implemented by software or hardware. The name of the unit does not constitute the limitation of the unit itself in some cases.

The functions described above herein can be at least partially executed by one or more hardware logic components. For example, without limitation, exemplary types of hardware logic components that can be used include: Field Programmable Gate Array (FPGA), Application Specific Integrated Circuit (ASIC), Application Specific Standard Product (ASSP), System on Chip (SOC), Complex Programmable Logic Device (CPLD) and so on.

In the context of the present disclosure, a machine readable medium can be a tangible medium that can contain or store a program for use by or in connection with an instruction execution system, apparatus or device. The machine readable medium can be a machine readable signal medium or a machine readable storage medium. The machine readable medium can include, but is not limited to, an electronic, magnetic, optical, electromagnetic, infrared, or semiconductor system, apparatus or device, or any suitable combination of the above. More specific examples of the computer readable storage medium can include an electrical connection based on one or more lines, a portable computer disk, a hard disk, a random access memory (RAM), a read-only memory (ROM), an erasable programmable read-only memory (EPROM or flash memory), an optical fiber, a convenient compact disk read-only memory (CD-ROM), an optical storage device, a magnetic storage device, or any suitable combination of the above.

According to one or more embodiments of the present disclosure, the present disclosure provides an electronic device including:
one or more processors;
a memory for storing one or more programs;
wherein the one or more programs, when executed by the one or more processors, cause the one or more processors to implement any of the information display methods as provided by the present disclosure.

According to one or more embodiments of the present disclosure, the present disclosure provides a computer readable storage medium storing thereon a computer program which, when executed by a processor, implements any of the information display methods as provided by the present disclosure.

The embodiment of the present disclosure further provides a computer program product comprising a computer program or instructions which, when executed by a processor, implement any of the information display methods as above.

According to one or more embodiments of the present disclosure, the present disclosure provides a computer program comprising instructions which, when executed by a processor, cause the processor to execute any of the information display methods as provided by the present disclosure.

Compared with the related art, the technical solution provided by the embodiment of the present disclosure has the following advantages.

According to the technical solution provided by the embodiment of the present disclosure, by providing and displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object further comprises one or more pieces of specification attribute information of the target to-be-displayed object; if at least one piece of the specification attribute information is in a selected state, displaying an order confirmation page corresponding to the target to-be-displayed object in response to a determination operation on the target summary information. Its essence is to transparently transmit the specification attribute information of the target to-be-displayed object to the object display page, so that the user can directly select the specification attribute information of the target to-be-displayed object in the object display page, which can simplify the steps of placing an order to buy the target to-be-displayed object and shorten the time consumed for the order placing operation.

It should be noted that, relational terms such as "first" and "second" herein are only used to distinguish one entity or operation from another entity or operation, and do not necessarily require or imply that there is any such actual relationship or order between these entities or operations. Moreover, the terms "including", "containing" or any other variation thereof are intended to cover non-exclusive inclusion, so that a process, method, article or device including a series of elements includes not only those elements, but also other elements not explicitly listed or elements inherent to such process, method, article or device. Without further restrictions, an element defined by the phrase "including one" does not exclude the presence of other identical elements in the process, method, article or device including the element.

What has been described above is only the specific implementations of the present disclosure, so that those skilled in the art can understand or implement the present disclosure. Many modifications to these embodiments will be obvious to those skilled in the art, and the general principles defined herein can be implemented in other embodiments without departing from the spirit or scope of the present disclosure. Therefore, the present disclosure will not be limited to the embodiments described herein, but is to be accorded the widest scope consistent with the principles and novel features disclosed herein.

## Claims

1. An information display method, comprising:
displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object further comprises one or more pieces of specification attribute information of the target to-be-displayed object;
displaying, if at least one piece of the specification attribute information is in a selected state, an order confirmation page corresponding to the target to-be-displayed object in response to a determination operation on the target summary information.

2. The information display method according to Claim 1, wherein the target to-be-displayed object comprises at least one of the following:
a to-be-displayed object in a state of being explained, a to-be-displayed object with a display priority meeting a preset display condition, and a to-be-displayed object with a popularity value meeting a preset popularity condition.

3. The information display method according to Claim 1, wherein, if at least two pieces of the specification attribute information are in the selected state, each piece of the specification attribute information in the selected state corresponds to a different category.

4. The information display method according to any one of Claims 1 to 3, wherein a display position of the summary information corresponding to the target to-be-displayed object is a first display position in the object display page.

5. The information display method according to any one of Claims 1 to 3, wherein, the displaying, if at least one piece of the specification attribute information is in a selected state, an order confirmation page corresponding to the target to-be-displayed object in response to a determination operation on the target summary information, comprises:
in response to a selection operation on at least one piece of the specification attribute information, switching the selected piece of specification attribute information from an unselected state to the selected state;
in response to the determination operation on the summary information of the target to-be-displayed object, displaying an order confirmation page corresponding to the target to-be-displayed object.

6. The information display method according to Claim 5, wherein at least one of the following is satisfied:
a background color of the specification attribute information in the selected state is different from that of the specification attribute information in the unselected state; or,
a text color of the specification attribute information in the selected state is different from that of the specification attribute information in the unselected state; or,
a border color of the specification attribute information in the selected state is different from that of the specification attribute information in the unselected state.

7. The information display method according to Claim 1, wherein the summary information comprises at least one of following:
image information; if at least one piece of the specification attribute information is in the selected state, the image information is image information of the target to-be-displayed object under the specification attribute in the selected state; or
label information; if at least one piece of the specification attribute information is in the selected state, the label information is label information of the target to-be-displayed object under the specification attribute in the selected state.

8. The information display method according to any one of Claims 1 to 3, wherein the summary information comprises an information display area, and the specification attribute information is located in the information display area; if the number of pieces of the specification attribute information that can be accommodated in the information display area is less than the number of pieces of the specification attribute information that need to be displayed, the method further comprises:
switching the pieces of specification attribute information displayed in the information display area in response to a trigger operation on the information display area.

9. The information display method according to any one of Claims 1 to 3, wherein the summary information comprises an information display area, and the specification attribute information is located in the information display area; if the number of pieces of the specification attribute information that can be accommodated in the information display area is less than the number of pieces of the specification attribute information that need to be displayed, a portion of the pieces of the specification attribute information and an omit control are displayed in the information display area; the method further comprises:
displaying a specification attribute selection page in response to a trigger operation on the omit control, wherein the specification attribute selection page comprises all the specification attribute information of the target to-be-displayed object.

10. The information display method according to any one of Claims 1-3, 6 and 7, wherein the information stream page comprises a live room preview stream page or a live room display page;
the to-be-displayed objects comprise commodities;
the specification attribute information comprises at least one of the following: size, style, material, and color.

11. An information display apparatus, comprising:
a first display module for displaying an information stream page, wherein the information stream page comprises an object display page; the object display page comprises summary information corresponding to one or more to-be-displayed objects, and the one or more to-be-displayed objects are to-be-displayed objects corresponding to the information stream page; if the one or more to-be-displayed objects comprise a target to-be-displayed object, the summary information corresponding to the target to-be-displayed object further comprises one or more pieces of specification attribute information of the target to-be-displayed object;
a second display module for displaying, if at least one piece of the specification attribute information is in a selected state, an order confirmation page corresponding to the target to-be-displayed object in response to a determination operation on the target summary information.

12. An electronic device comprising:
one or more processors;
storage means for storing one or more programs;
wherein the one or more programs, when executed by the one or more processors, cause the one or more processors to implement the method according to any one of Claims **1-10.**

13. A computer readable storage medium storing thereon a computer program which, when executed by a processor, implements the method according to any one of Claims **1-10.**

14. A computer program product comprising a computer program which, when executed by a processor, implements the information display method according to any one of Claims 1-10.

15. A computer program, comprising:
instructions which, when executed by a processor, cause the processor to execute the information display method according to any one of Claims 1 to 10.
